Europäisches Patentamt

European Patent Office

Office européen des brevets

(11) Veröffentlichungsnummer: **0 417 349 A1**

(19)

(12) **EUROPÄISCHE PATENTANMELDUNG**

(21) Anmeldenummer: 89117140.7

(22) Anmeldetag: 15.09.89

(51) Int. Cl.5: **B60H 1/00**

(43) Veröffentlichungstag der Anmeldung:
20.03.91 Patentblatt 91/12

(84) Benannte Vertragsstaaten:
**DE ES FR**

(71) Anmelder: **Siemens Aktiengesellschaft**
Wittelsbacherplatz 2
W-8000 München 2(DE)

(72) Erfinder: **Hartleb, Thomas, Dipl.-Ing. (FH)**
**Kleinwalburer Strasse 13**
**W-8631 Meeder(DE)**

(54) Belüftungsanlage.

(57) Um bei einer programmgeregelten Belüftungsanlage für ein Kraftfahrzeug mit u.a. temperaturabhängig regelbarer Luftmenge (Gebläse 3) und Luftverteilung (Fußraum, Mittelebene, Defrost) mit einfachen regeltechnischen Mitteln den Einfluß der Sonneneinstrahlung unter Berücksichtigung des thermischen Wohlbefindens der Insassen kompensieren zu können, ist erfindungsgemäß vorgesehen, daß in eingeschwungenem Zustand der Regelung in Abhängigkeit von dem Außentemperatur-Sensor (21) jeder Außentemperatur ($T_A$) eine bestimmte, die eingestellte Innentemperatur gewährleistende Luftmenge zugeordnet und in Abhängigkeit von dem Sonneneinstrahlungs-Sensor (23) im Sinne einer Kompensation der zusätzlichen Sonnenerwärmung des Innenraums die in den Innenraum geförderte Luftmenge erhöht ist; eine weitere Komfortsteigerung ist mit geringem Aufwand durch eine zusätzliche Änderung der Luftverteilung in Abhängigkeit von dem Sonneneinstrahlungs-Sensor (23) im Sinne einer verstärkten Luftströmung zur Mittelebene, einer entsprechend verminderten Luftströmung zum Fußraum und einer frühzeitigeren Minderung bzw. Sperrung des Luftstromes zur Defrost-Scheibenebene möglich.

FIG 1

EP 0 417 349 A1

## BELÜFTUNGSANLAGE

Die Erfindung bezieht sich auf eine Belüftungsanlage gemäß Oberbegriff des Anspruchs 1; eine derartige Belüftungsanlage ist aus der DE-A1-37 30 466 bekannt.

Bei der durch die DE-A1-37 30 466 bekannten Belüftungsanlage mit automatisch geregelter Lufttemperatur mit angepaßter Luftmenge und Luftverteilung im Fahrgastraum des Kraftfahrzeuges wird der Sonneneinstrahlungs-Sensor dazu benutzt, um abhängig vom Grad einer Sonneneinstrahlung der Regelautomatik einen gegenüber der an einem Bediengerät im Fahrgastraum des Kraftfahrzeuges eingestellten Temperatur verringerten Temperatur-Sollwert vorzugeben und derart die aufgrund der Sonneneinstrahlung zu erwartende Erhöhung der Innentemperatur zu kompensieren; da gleichzeitig von dem Innentemperatur-Sensor wegen der Erhöhung der Innentemperatur nach verstärkter Sonneneinstrahlung die Regelautomatik zu einer stärkeren Kühlung der in den Innenraum strömenden Luft veranlaßt wird, kann es bei der Kompensierung der Sonneneinstrahlung zu Einstellungen der Luftmenge und der Luftverteilung kommen, die das thermische Wohlbefinden der Insassen z.B. aufgrund von z.B. Zugerscheinungen stören.

Eine wesentliche Verbesserung des Belüftungskomforts bei einer zu kompensierenden Sonneneinstrahlung kann bei einer Belüftungsanlage mit temperaturabhängig automatisch vorgegebener Luftverteilung und Luftmenge der eingangs genannten Art mit einfachen Mitteln durch die Lehre des Anspruchs 1 erreicht werden; erfindungsgemäß kann dadurch eine schnelle Reaktion im Sinne einer erhöhten Kühlleistung bei verstärkter Sonneneinstrahlung gewährleistet und gleichzeitig eine Überkühlung durch ein unerwünschtes Reagieren der Regelvorrichtung auf die von dem Innentemperatur-Sensor und dem Sonneneinstrahlungs-Sensor gelieferten Istwerte bei verstärkter Sonneneinstrahlung vermieden werden. Das thermische Wohlbefinden der Insassen bei Kompensierung der Sonneneinstrahlung kann dadurch noch weiter erhöht werden, daß nach einer Ausgestaltung der Erfindung eine zusätzliche Änderung der Luftverteilung in Abhängigkeit von dem Sonneneinstrahlungs-Sensor im Sinne einer verstärkten Luftförderung zur Mittelebene, einer entsprechend verminderten Luftförderung zum Fußraum und einer frühzeitigeren Minderung bzw. Sperrung des Luftstromes zur Defrost-Scheibenebene vorgesehen ist.

Die Erfindung sowie weitere vorteilhafte Ausgestaltungen der Erfindung werden im folgenden anhand eines schematisch dargestellten Ausführungsbeispiels einer automatischen Klimaanlage für ein Kraftfahrzeug erläutert; darin zeigen:

FIG 1 den Prinzipaufbau eines automatisch geregelten Kraftfahrzeug-Klimagerätes mit u.a. regelbarer Luftverteilung und Luftmenge,

FIG 2 in einem Diagramm die Abhängigkeit der Luftmenge von der Außentemperatur und der Sonneneinstrahlung,

FIG 3 die Abhängigkeit der Luftverteilung von der Außentemperatur und der Sonneneinstrahlung.

In einem automatisch, vorzugsweise elektronisch geregelten Klimagerät werden die Lufttemperatur im Fahrgastraum des Kraftfahrzeuges in einem geschlossenen Regelkreis nach einem vorgegebenen Sollwert geregelt und dazu Gebläsedrehzahl, Luftverteilerklappen, Frischluft-/Umluftklappen, Kompressor und Wasserventil nach einem von der elektronischen Regelschaltung vorgegebenen Programm automatisch eingestellt. Als Eingangsgrößen für die Regelschaltung dienen die von dem oder den Fahrzeuginsassen zu betätigenden Einstellelemente in der Bedienungsebene des Fahrzeuges sowie Signale von verschiedenen Sensoren, insbesondere von Temperatur-Sensoren für die Außenluft, für die Ausblasluft in der zentralen ausgangsseitigen Luftkammer des Klimagerätes, der Innenluft im Fahrzeug-Innenraum, dem Wärmetauscher und dem Verdampfer sowie einem Sensor zur Erfassung der Intensität der Sonneneinstrahlung.

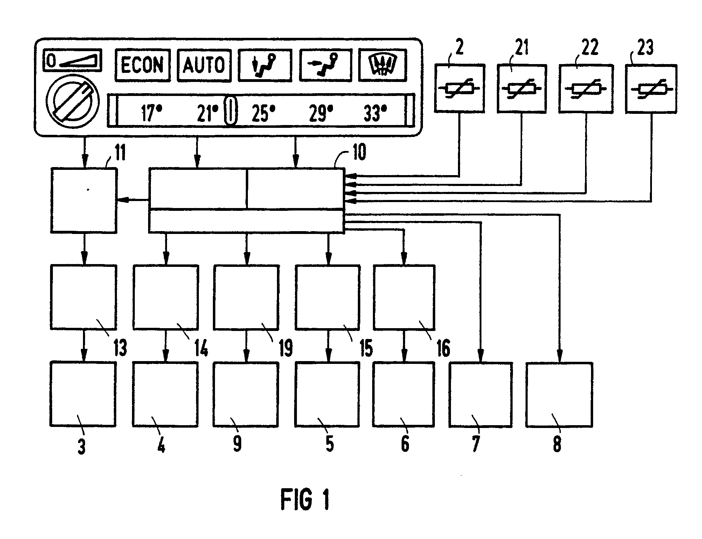

Im einzelnen zeigt FIG 1 ein Bediengerät 1, z.B. am Armaturenbrett des Fahrzeuges mit u.a. einem Drehschalter zur Einstellung der Gebläsedrehzahl und damit der jeweiligen Luftmenge, einem Schieberegeler zur Einstellung der gewünschten Innentemperatur sowie mehreren Tasten zur Einstellung der Belüftungsanlage von Hand und einer Automatiktaste zur Umschaltung auf automatische Klimatisierung. Die im Automatikbetrieb eingestellte Innentemperatur wird als Sollwert einer Regelvorrichtung 10 vorgegeben, die weiterhin eingangsseitig Istwerte u.a. von einem Innentemperatur-Sensor 2, einem Außentemperatur-Sensor 21, einem Ausblastemperatur-Sensor 22 und einem Sonneneinstrahlungs-Sensor 23 erhält. Zum aktiven Teil der Belüftungsanlage zählen weiterhin ein Gebläse 3, mit einer zugehörigen Elektronik 11 zur Gebläseansteuerung und einem Leistungstransistor 13, einer Luftkammer 4 mit Magnetventilen und Vakuumdosen 14 zur Steuerung der die Luftverteilung einstellenden Luftverteilerklappen in der Luftkammer 4, verstellbare Luftauslässe 9 mit zugehörigen Stellantrieben 19, eine Mischluftklappe 5 zur Mischung von Kaltluft und Warmluft mit zugehörigem Stellantrieb 15 mit Rückführung, eine Umluftklappe 6 mit zugehöriger Vakuumdose 16 zur Ansteuerung der Umluftklappe sowie einem Verdampfer 7 und einem Wasserventil 8.

Die vorgegebenen Sollwerte der Innentemperatur, die Istwerte der Sensoren und die vorgenannten aktiven Bauteile der Belüftungsanlage sind durch die Regelschaltung 10 verknüpft, die im wesentlichen einen Speicher für die fahrzeugspezifische Luft verteilungs- und Luftmengenlogik, ein PI-Regelglied in einem Mikroprozessor umfaßt. In Abhängigkeit von dem im Speicher vorgegebenen Programm, dem Innentemperatur-Sollwert und den Istwerten der Sensoren werden von der Regelvorrichtung 10 u.a. die Gebläsedrehzahl und damit die Luftmenge sowie die Luftverteilerklappen zur Verteilung der Luft in den Innenraum des Fahrzeuges, insbesondere zu Luftauslässen im Fußraum bzw. in der Mittelebene bzw. in der Defroster-Scheibenebene, geregelt.

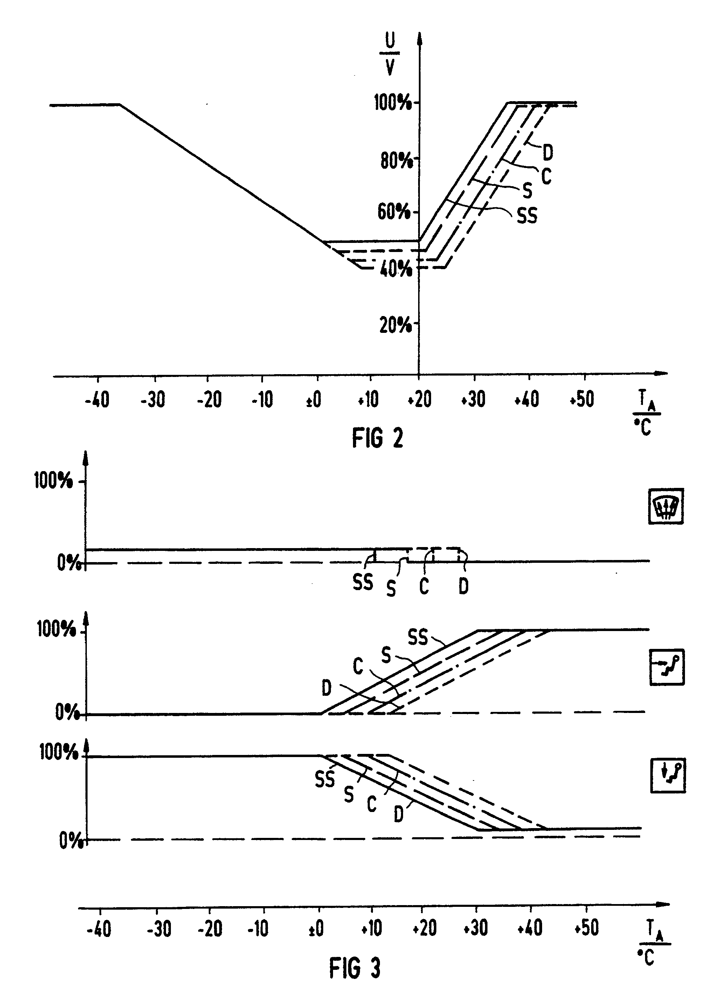

FIG 2 zeigt in einem Diagramm die gespeicherten Kennlinien für die Speisespannung des durch Änderung der Spannung U/V drehzahlregelbaren Gebläses 3 in Abhängigkeit von der jeweiligen Außentemperatur $T_A$. Die untere Kennlinie D zeigt den Verlauf der jeweiligen Speisespannung des Gebläses 3 bei nicht vorhandener Sonneneinstrahlung, d.h. bei Dunkelheit D ("dark"). Die darüberliegende Kennlinie zeigt die erfindungsgemäße Erhöhung der Luftmenge in Abhängigkeit von dem Temperatur-Istwert des Sonneneinstrahlungs-Sensors 23 bei bewölktem Himmel C ("claudy"), die darüberliegende Kennlinie die noch weiter verstärkte Luftmenge bei durch den Sonneneinstrahlungs-Sensor 23 gemeldetem sonnigen Himmel S ("sunny") und schließlich die oberste Kennlinie den Verlauf der Spannung U/V des Gebläses 3 bei sehr starker Sonneneinstrahlung SS ("sunny-sunny"). Wie aus dem Verlauf der Kennlinien des Diagramms gemäß FIG 2 ersichtlich, beginnt der erfindungsgemäß vorgesehene Einsatz der verstärkten Luftmengenregelung in Abhängigkeit von dem Sonneneinstrahlungs-Sensor 23 im Bereich bzw. kurz oberhalb von Null Grad Außentemperatur $T_A$.

FIG 2 zeigt die erfindungsgemäß veränderte Luftmengenverteilung für die Luftauslässe in der Defroster-Scheibenebene, der Mittelebene und im Fußraum in Abhängigkeit von dunklem Himmel D bzw. bewölktem Himmel C bzw. bei Sonne S bzw. bei wolkenlosem Himmel mit sehr starker Sonneneinstrahlung SS; gemäß der erfin dungsgemäß geregelten Luftverteilung ist demnach in Abhängigkeit von der durch den Sonneneinstrahlungs-Sensor 23 gemeldeten Sonnenintensität die auf die Mittelebene verteilte Luftmenge erhöht und die in den Fußraum gelangende Luftmenge entsprechend vermindert bzw. die zur Defrost-Scheibenebene zu einem früheren Außentemperaturwert hin gesperrt.

## Ansprüche

1. Belüftungsanlage mit einer zumindest teilweise temperaturabhängigen automatischen Regelung des Luftzustandes im Innenraum eines Kraftfahrzeuges, bei der zumindest Bedienelemente (Bediengerät 1) zur Einstellung einer Innentemperatur, Steuervorrichtungen für eine unterschiedliche Luftmenge (Gebläse 3) und Luftverteilung (Luftauslässe 9) sowie Sensoren zur Erfassung der Innentemperatur (2), der Außentemperatur (21) und der Sonneneinstrahlung (23) mittels einer Regelvorrichtung (10) verknüpft sind, derart daß die Luft in automatisch programmregelbarer Menge und Temperatur Luftauslässen (9) in verschiedenen Ebenen des Innenraumes zuführbar ist, **dadurch gekennzeichnet**, daß in eingeschwungenem Zustand der Regelung in Abhängigkeit von dem Außentemperatur-Sensor (21) jeder Außentemperatur ($T_A$) eine bestimmte, die eingestellte Innentemperatur gewährleistende Luftmenge zugeordnet und in Abhängigkeit von dem Sonneneinstrahlungs-Sensor (23) im Sinne einer Kompensation der zusätzlichen Sonnenerwärmung des Innenraums die in den Innenraum geförderte Luftmenge erhöht ist.

2. Belüftungsanlage nach Anspruch 1, **gekennzeichnet** durch eine Erhöhung der Luftmenge um etwa 10 % bei sehr starker Sonneneinstrahlung im Vergleich zur Luftmenge bei Dunkelheit.

3. Belüftungsanlage mit einer veränderbaren Luftverteilung zu Luftauslässen zumindest im Fußraum, in der Mittelebene und in der Defrost-Scheibenebene, **gekennzeichnet** durch eine zusätzliche Änderung der Luftverteilung in Abhängigkeit von dem Sonneneinstrahlungs-Sensor (23) im Sinne einer verstärkten Luftströmung zur Mittelebene, eine entsprechend verminderten Luftströmung zum Fußraum und einer frühzeitigeren Minderung bzw. Sperrung des Luftstromes zur Defrost-Scheibenebene.

4. Belüftungsanlage nach Anspruch 3, **gekennzeichnet** durch eine jeweilige Erhöhung bzw. Minderung der Luftmenge von etwa 10 % bei sehr starker Sonneneinstrahlung im Vergleich zur Luftmenge bei Dunkelheit.

5. Belüftungsanlage nach einem der Ansprüche 1-4, **gekennzeichnet** durch eine Luftmengenänderung bzw. Luftverteilungsänderung in Abhängigkeit von dem Sonneneinstrahlungs-Sensor bei einer Außentemperatur $T_A$ 0 $^\circ$ C.

FIG 1

FIG 2

FIG 3

5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4852798 (HITACHI LTD)<br>* Spalte 2, Zeile 19 - Spalte 7, Zeile 22 * | 3 | B60H1/00 |
| A | * Figuren 1-4, 7, 8 *<br>--- | 1, 4, 5 | |
| D,Y | DE-A-3730466 (SIEMENS AG)<br>* das ganze Dokument * | 1 | |
| D,A | ---| 3 | |
| Y | US-A-4586652 (DIESEL KIKI CO.LTD.)<br>* Spalte 4, Zeile 30 - Spalte 5, Zeile 20;<br>Figuren 1, 2, 4 *<br>--- | 1 | |
| A | PATENT ABSTRACTS OF JAPAN<br>vol. 7, no. 179 (M-234)(1324) 09 August 1983,<br>& JP-A-58 81815 (NISSAN JIDOSHA K.K.) 17 Mai<br>1983,<br>* das ganze Dokument *<br>--- | 3, 4 | |
| A | US-A-4523715 (NISSAN MOTOR COMPANY)<br>* Figuren 1, 2, 4, 6 *<br>--- | 1, 3 | |
| A | US-A-4448035 (TOYOTA JIDOSHA K.K.K.)<br>* Spalte 3, Zeile 39 - Spalte 4, Zeile 33 *<br>* Spalte 8, Zeile 34 - Spalte 9, Zeile 22;<br>Figuren 4, 20, 23 *<br>--- | 1, 2, 4, 5 | RECHERCHIERTE SACHGEBIETE (Int. Cl.5)<br><br>B60H |
| A | US-A-4498309 (NISSAN SHATAI COMPANY)<br>* Spalte 3, Zeile 38 - Spalte 4, Zeile 2;<br>Ansprüche 13-19; Figuren 1-7 *<br>--- | 1, 3 | |
| A | PATENT ABSTRACTS OF JAPAN<br>vol. 12, no. 487 (M-778)(3334) 20 Dezember 1988,<br>& JP-A-63 207711 (DIESEL KIKI CO. LTD.) 29<br>August 1988,<br>* das ganze Dokument *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 22 MAI 1990 | TSITSILONIS L. |